# EUROPÄISCHE PATENTSCHRIFT

(11) **EP 2 481 495 B1**
(45) Veröffentlichungstag und Bekanntmachung des Hinweises auf die Patenterteilung: **06.04.2016**
(21) Anmeldenummer: 12000463.5
(22) Anmeldetag: 26.01.2012
(51) Int. Cl.: B21D 35/00, B21D 28/06, B21D 43/14, B21D 43/22, H02K 1/14, H02K 15/02

(54) **Verfahren zur Herstellung von aus Lamellenstapeln Gebildeten Endprodukten**
Method for producing end products made from stacked laminations
Procédé de fabrication de produits finis constitués de piles de lamelles

(30) Priorität: 31.01.2011 DE 102011010825
(43) Veröffentlichungstag der Anmeldung: 01.08.2012
(73) Patentinhaber: Kienle + Spiess GmbH, 74343 Sachsenheim (DE)
(72) Erfinder: Bauer, Steffen, 74374 Zaberfeld (DE)
(74) Vertreter: Kohl, Karl-Heinz

(56) Entgegenhaltungen:
- EP-A2- 1 833 145
- DE-A1-102009 004 391
- FR-A1- 2 739 633
- JP-A- 2005 020 972
- JP-A- 2006 026 662
- US-A1- 2004 168 300

## Beschreibung

Die Erfindung betrifft ein Verfahren zur Herstellung von aus Lamellenstapeln gebildeten Endprodukten nach dem Oberbegriff des Anspruches 1.

Die serienmäßige Herstellung von Lamellen für Elektromotoren oder Generatoren erfolgt in einem Stanzprozess mit Stanzwerkzeugen. In mehreren Arbeitsfolgen werden aus dem Blechband die Lamellen gestanzt, wobei mit einer Auslocheinheit, die in der Regel die letzte aktive Arbeitsfolge innerhalb des Stanzprozesses ausführt, die Lamelle vollständig aus dem Blechband getrennt und in der Matrize der Auslocheinheit zu einem Lamellenstapel geschichtet wird. Innerhalb des Lamellenstapels können die aufeinanderliegenden Lamellen durch verschiedene Verbindungsverfahren miteinander verbunden werden. Zur Verbesserung der geometrischen Toleranz des Endproduktes, hervorgerufen durch Banddickentoleranzen innerhalb des im Stanzprozess zu verarbeitenden Blechbandes, ist es bekannt, aufeinanderliegende Lamellen gegeneinander zu verdrehen. Ebenso kann zur Erreichung spezifischer Leistungsdaten des Endproduktes durch geringfügiges gegenseitiges Verdrehen der Lamellen eine Schrägung der Nuten innerhalb des Lamellenstapels erzeugt werden. Auch zum Ausgleich der Walzrichtung des Blechbandes werden die Lamellen relativ zueinander innerhalb des Lamellenstapels verdreht. Die Auslocheinheit bildet hierbei eine Dreheinheit, die um ihre Achse gedreht wird, wobei nach jedem Stanzhub der Auslocheinheit oder nach einer frei definierbaren Anzahl von Stanzhüben des Stanzwerkzeuges eine Drehung vorgenommen wird. Der Drehwinkel der Dreheinheit ist frei wählbar und richtet sich nach den Spezifikationen des zu erzeugenden Endproduktes. Das Drehen der gestanzten Lamellen ist möglich, weil die Lamellen sowie das daraus hergestellte Endprodukt rotationssymmetrisch ausgebildet sind.

Ist das Endprodukt aus nicht rotationssymmetrischen, aufeinandergesetzten Lamellen gebildet, ist eine Drehung der einzelnen, nicht rotationssymmetrischen Lamellen nicht möglich, so dass die bei rotationssymmetrischen Lamellen möglichen verfahrenstechnischen Maßnahmen zur Verbesserung der geometrischen Toleranzen des Endproduktes und/oder zum Ausgleich der Walzrichtung des Blechbandes und/oder zur Herstellung einer Nutschrägung nicht angewendet werden können.

Bei einem bekannten Verfahren (JP-A-2006026662) liegen die bei einem Stanzhub gestanzten Lamellen innerhalb des Blechbandes verdreht zueinander. Aus dem Lamellenband werden zwei Lamellen gestanzt, die anschließend zu einem Lamellenstapel aufeinandergesetzt werden. Die Lamellenstapel werden in Aufnahmekammern einer Dreheinheit gebildet. Die Lamellenstapel werden anschließend zu einem ringförmigen Lamellenstapel zusammengefügt, der das Endprodukt bildet. Die Drehachse der Dreheinheit liegt innerhalb des so gebildeten Endproduktes. Beim Ablegen der einzelnen Lamellen innerhalb jedes Lamellenstapels wird die Dreheinheit um einen geringen Drehwinkel gedreht, um einen Lamellenstapel mit einer Nutschrägung herzustellen.

Bei einem anderen bekannten Verfahren (DE-A-10 2009 004 391) werden aus einem Blechband nicht rotationssymetrische Lamellen so gestanzt, dass im Blechband aufeinanderfolgende Lamellen jeweils um 180° verdreht angeordnet sind.

Bei einem weiteren bekannten Verfahren (JP-A-2005020972) werden die Lamellen im Blechband gleich ausgerichtet hintereinander gestanzt und einer Dreheinheit zugeführt. In dieser Dreheinheit werden die Lamellen aufeinander gestapelt, wobei aufeinanderliegende Lamellen jeweils um einen geringen Winkel verdreht zueinander angeordnet sind, um ein Lamellenpaket mit einer Steigung zu erhalten.

Der Erfindung liegt die Aufgabe zugrunde, das gattungsgemäße Verfahren so auszubilden, dass auch für nicht rotationssymmetrische Lamellen sowie daraus hergestellten nicht rotationssymmetrischen Endprodukten eine hervorragende Produktqualität aufgrund nur geringer geometrischer Toleranzen und/oder aufgrund eines Ausgleiches der Walzrichtung des Blechbandes innerhalb des Lamellenstapels gewährleistet sind.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird jede oder wenigstens einige der Lamellen mittels der Dreheinheit nach dem Stanzhub um eine außerhalb des zu bildenden Lamellenstapels liegende Achse so gedreht, dass die nach dem Stanzen verdreht zueinander liegenden Lamellen deckungsgleich aufeinander liegen. Da die Drehachse der Dreheinheit außerhalb des Endproduktes liegt, werden die Lamellen innerhalb des Blechbandes neben der Drehachse der Dreheinheit angeordnet. Dadurch ist es möglich, die Lamellen nach dem Stanzhub, obwohl sie nicht rotationssymmetrisch ausgebildet sind, so zu drehen, dass sie innerhalb des Lamellenstapels deckungsgleich aufeinander liegen. Auf diese Weise ist es auch bei nicht rotationssymmetrischen Lamellen möglich, geometrische Toleranzen zu minimieren und damit die mechanischen Eigenschaften des Endproduktes zu verbessern. Auf diese Weise ergibt sich eine hervorragende Qualität des Endproduktes. Durch das Drehen der nicht rotationssymmetrischen Lamellen ist auch ein Ausgleich der Walzrichtung des Blechbandes möglich, wodurch die elektrischen Eigenschaften des Endproduktes wesentlich verbessert werden. Sowohl die Verbesserung der mechanischen als auch der elektrischen Eigenschaften des Endproduktes tragen zur Reduzierung von Verlusten beim Einsatz des Endproduktes in Elektromotoren oder Generatoren wesentlich bei, so dass sich eine hervorragende Gesamteffizienz der Endprodukte ergibt.

Um eine optimale Materialausnutzung des Blechbandes beim Stanzprozess zu erreichen, werden die Lamellen vorteilhaft in wenigstens zwei Spuren aus dem Blechband gestanzt. Dementsprechend wird auch ein wenigstens zweispuriges Stanzwerkzeug eingesetzt.

In einem Stanzhub werden vorteilhaft gleichzeitig wenigstens zwei Lamellen aus dem Blechband gestanzt. Vorteilhaft werden hierbei aus den gestanzten Lamellen auch gleichzeitig wenigstens zwei Lamellenstapel und damit wenigstens zwei Endprodukte gebildet.

Wenn die Lamellen eine Außenseite haben, die teilkreisförmig verläuft, dann liegt die Drehachse der Dreheinheit außerhalb des Mittelpunktes des Außendurchmessers des Lamellenpaketes.

Wenn die Lamelle eine Innenseite aufweist, die teilkreisförmig gebogen ist, dann liegt die Drehachse der Dreheinheit auch außerhalb des Mittelpunktes des Innendurchmessers des Lamellenpaketes.

In beiden beschriebenen Fällen liegt somit die Drehachse der Dreheinheit außerhalb des Außen- bzw. Innendurchmessers des aus solchen Lamellen gebildeten Endproduktes. Durch diese Zuordnung von Drehachse der Dreheinheit und Mittelpunkt von Aussen/Innendurchmesser des Endproduktes ist es möglich, die zur Bildung des Endproduktes verwendeten Lamellen innerhalb des Lamellenpaketes trotz ihrer nicht rotationssymmetrischen Gestaltung relativ verdreht zueinander aufeinander zu legen.

Die Vorrichtung zur Durchführung des erfindungsgemäßen Verfahrens zeichnet sich dadurch aus, dass die Drehachse der Dreheinheit außerhalb des in der Dreheinheit gebildeten Endproduktes liegt. Mit der Vorrichtung ist es möglich, die Lamellen nach dem Stanzen aus dem Blechband relativ verdreht zueinander aufeinanderzusetzen. Hierzu wird die Dreheinheit bei einem Stanzhub um ihre Achse gedreht, wodurch die in der Dreheinheit befindlichen, zuvor gestanzten und aufeinandergesetzten Lamellen in den Bereich unterhalb der zu stanzenden Lamellen gelangen. Aufgrund der Drehbewegung sind die in der Dreheinheit bereits befindlichen Lamellen relativ zu den zu stanzenden Lamellen entsprechend verdreht angeordnet.

Vorteilhaft weist die Dreheinheit eine der Zahl der zu bildenden Lamellenstapel entsprechende Zahl von Aufnahmen für die Lamellen auf. Werden beispielhaft in einem Stanzhub zwei Lamellen gestanzt, dann ist die Dreheinheit mit wenigstens zwei Aufnahmen für diese Lamellen versehen. In diesen Aufnahmen werden die Lamellen gestapelt, wodurch gleichzeitig wenigstens zwei Lamellenstapel in der Dreheinheit erzeugt werden.

Der Lamellenstapel zeichnet sich dadurch aus, dass zumindest einige der nicht rotationssymmetrischen Lamellen verdreht deckungsgleich aufeinander liegen. Bei einer bevorzugten Ausführungsform liegt jede Lamelle jeweils verdreht auf der unteren Lamelle. Aufgrund der Drehung der Lamellen werden die geometrischen Toleranzen minimiert und die elektrischen Eigenschaften des Lamellenstapels wesentlich verbessert. Somit werden die Verluste beim Einsatz des Lamellenstapels in Elektromotoren oder Generatoren verringert, so dass sich eine hervorragende Gesamteffizienz des Endproduktes ergibt.

Weitere Merkmale der Erfindung ergeben sich aus den weiteren Ansprüchen, der Beschreibung und den Zeichnungen.

Die Erfindung wird nachstehend anhand zweier in den Zeichnungen dargestellter Ausführungsformen näher erläutert. Es zeigen
- Fig. 1: in schematischer Darstellung eine Vorrichtung zur Durchführung eines erfindungsgemäßen Verfahrens zur Herstellung von Lamellenstapeln,
- Fig. 2: in Draufsicht eine zweispurige Anordnung von Konturen für Einzelzähne in einem Blechband,
- Fig. 3: ein Lamellenpaket, das aus abwechselnd angeordneten Einzellamellen gebildet ist,
- Fig. 4: in einer Darstellung entsprechend Fig. 3 eine zweite Ausführungsform eines Lamellenstapels,
- Fig. 5: in vergrößerter Darstellung eine Draufsicht auf eine Lamelle,
- Fig. 6: in schematischer Darstellung und in Draufsicht die Zuordnung der gestanzten Lamellen zu einer Dreheinheit der Vorrichtung.
- Fig. 7: einen Schnitt durch die Dreheinheit der Vorrichtung.

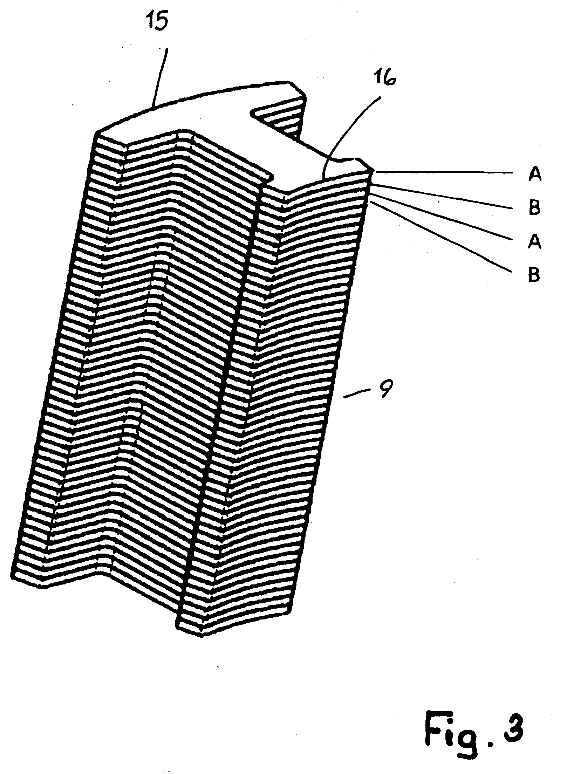

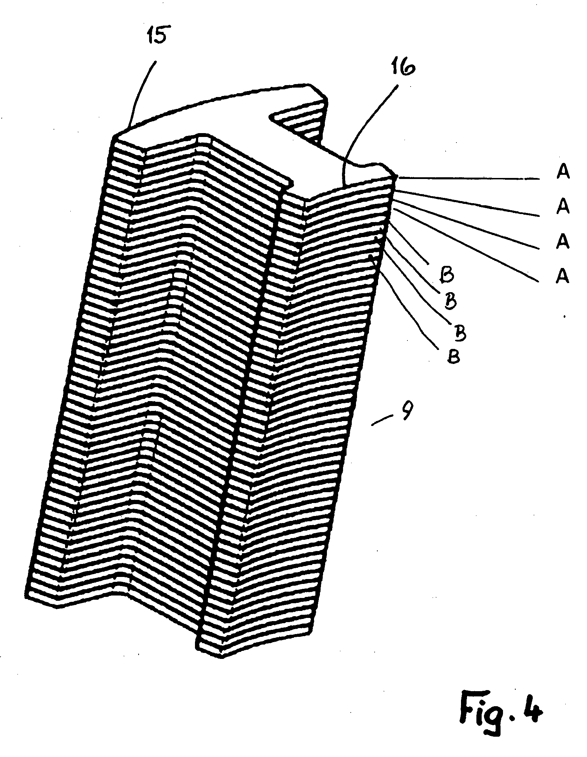

Die Stanzvorrichtung hat eine Stanzpresse 1, mit der ein Blechband 2 gestanzt wird. Er ist zu einem Coil 3 gewickelt, der auf einem Abwickler 4 drehbar gelagert ist. Das Blechband 2 wird optional in einem Richtapparat 5 gerichtet. Anschließend wird das Blechband 2 mit Hilfe eines Vorschubapparates 6 der Stanzpresse 1 zugeführt. Sie hat wenigstens ein Stanzwerkzeug 7, das in einem Arbeitsraum der Stanzpresse 1 vorgesehen ist. Aus dem Blechband 2 werden innerhalb des Stanzwerkzeuges 7 in einer oder in mehreren Arbeitsstufen Lamellen A, B gestanzt. Die Lamellen A, B werden zu einem Stapel 9 zusammengesetzt (Fig. 3 und 4). Innerhalb des Lamellenstapels 9 werden die aufeinanderliegenden Lamellen A, B in geeigneter Weise fest miteinander verbunden. Die Verbindungsverfahren sind bekannt und werden darum auch nicht im Einzelnen erläutert.

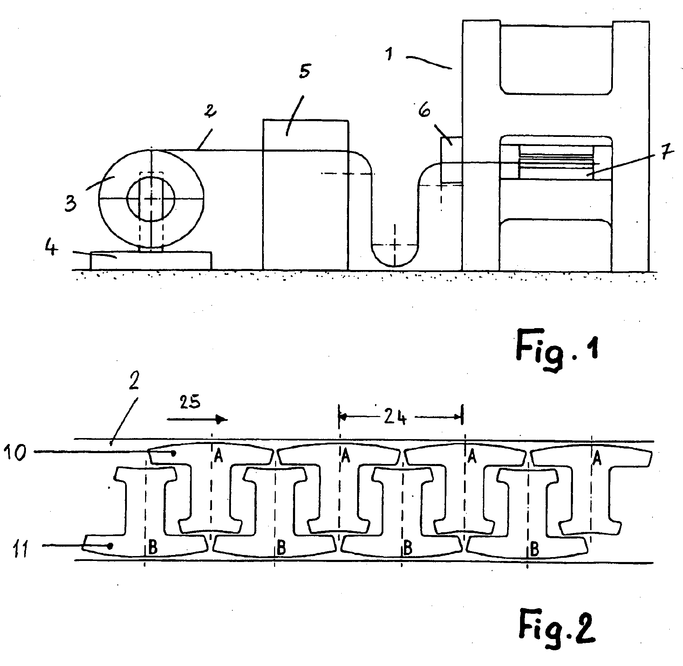

Zur Optimierung der wirtschaftlichen Fertigung der Lamellen A, B ist das Stanzwerkzeug 7 zwei- oder mehrspurig ausgebildet. Beim Ausführungsbeispiel nach Fig. 2 werden die Lamellen A, B in zwei parallel zueinander geordneten Spuren 10 und 11 aus dem Blechband 2 gestanzt. Fig. 2 zeigt die Konturen der im Stanzwerkzeug 7 zu stanzenden Lamellen A, B. Benachbarte Lamellen A, B werden jeweils um 180° verdreht zueinander aus dem Blechband 2 gestanzt. Die Abfallmenge beim Stanzvorgang kann somit sehr klein gehalten werden.

Im Ausführungsbeispiel sind diejenigen Lamellen, die in der Spur 10 gestanzt werden, mit A, und diejenigen Lamellen, die in der Spur 11 gestanzt werden, mit B bezeichnet.

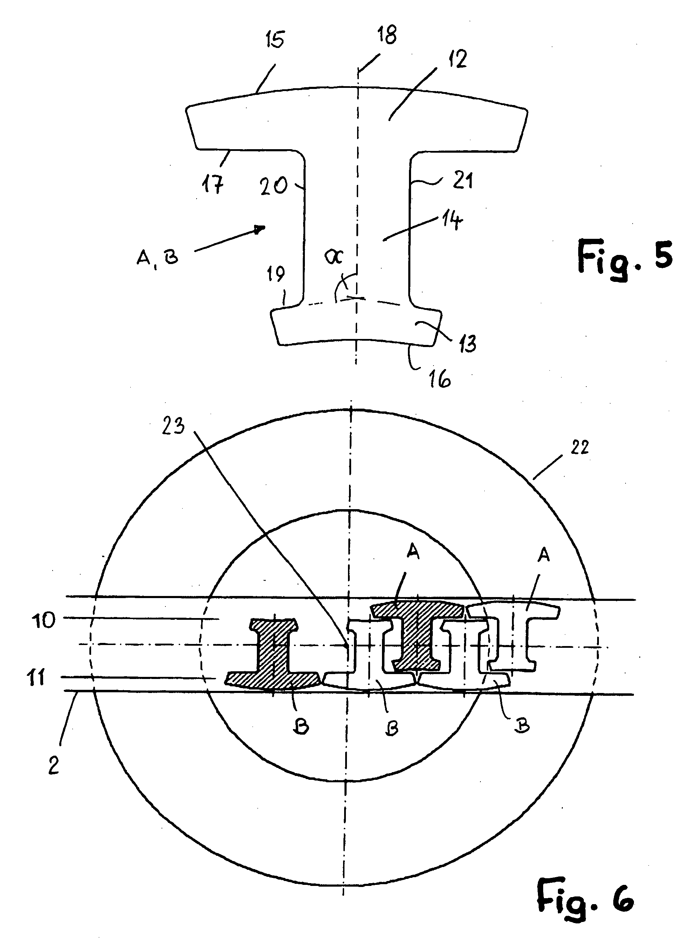

Die Lamellen A, B sind nicht rotationssymmetrische Teile und im Ausführungsbeispiel etwa T-förmig ausgebildet. Wie Fig. 5 zeigt, haben die Lamellen A, B Stege 12, 13, die durch einen Fuß 14 miteinander verbunden sind. Der Steg 12 ist länger als der Steg 13. Die Außenseite 15 des Steges 12 ist konvex gekrümmt, während die Außenseite 16 des Steges 13 konkav gekrümmt ausgebildet ist. Die Unterseite 17 des Steges 12 verläuft eben und senkrecht zur Symmetrieebene 18 der Lamelle A, B. Die Unterseite 19 des Steges 13 verläuft ebenfalls eben, allerdings unter einem stumpfen Winkel α zur Längssymmetrieebene 18.

Der Fuß 14 hat zwei parallel zueinander liegende Längsseiten 20, 21, die jeweils eben sind und stetig gekrümmt in die Unterseiten 17, 19 der beiden Stege 12, 13 übergehen.

Die beschriebene Lamelle A, B ist nur als Ausführungsbeispiel für ein nicht rotationssymmetrisches Teil zu verstehen. Je nach Einsatzfall können die nicht rotationssymmetrischen Lamellen A, B auch andere Umrissformen, beispielsweise U-Form, Kammform und dergleichen haben. Wesentlich ist, dass mit diesen Lamellen A, B die Lamellenstapel 9 hergestellt werden, die das Endprodukt darstellen. Die Lamellenstapel werden während des Stanzprozesses nicht mit weiteren Lamellenstapeln beispielsweise zu rotationssymmetrischen Endprodukten zusammengefügt. Die Lamellenstapel 9, wie sie beispielhaft in den Fig. 3 und 4 dargestellt sind, bilden das Endprodukt, das als solches für einen elektrischen Antrieb oder für Generatoren und dergleichen eingesetzt wird.

Beim Lamellenstapel 9 gemäß Fig. 3 werden die Lamellen, die in den Spuren 10 und 11 gestanzt worden sind, jeweils abwechselnd aufeinander gesetzt, so dass sich bezüglich der Lamellen die Stapelfolge A B A B ... ergibt.

Der Lamellenstapel gemäß Fig. 4 ist so gebildet, dass beispielhaft vier Lamellen A, die in der ersten Spur 10 gestanzt worden sind, aufeinandergesetzt werden, und dass anschließend vier Lamellen B, die in der Spur 11 gestanzt worden sind, aufeinandergesetzt werden. Auf diese Weise ergibt sich die Stapelfolge AAAA BBBB AAAA BBBB .....

Das Blechband 2 wird der Stanzpresse 1 zugeführt, in der mit dem Stanzwerkzeug 7 die Lamellen A, B gestanzt werden. Eine wechselnde Anordnung von Lamellen A und Lamellen B im Lamellenstapel 9 wird hierbei durch folgenden Ablauf erreicht.

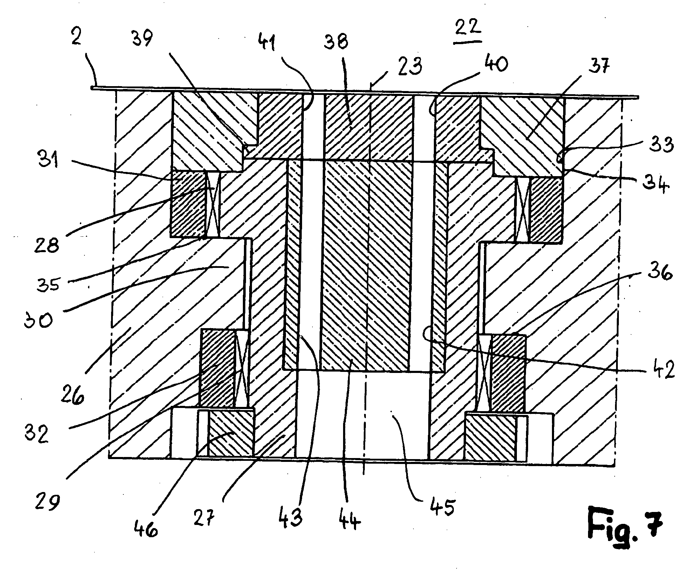

Nach dem ersten Arbeitshub der Stanzpresse 1 mit dem Stanzwerkzeug 7 befindet sich innerhalb der Lamellenaufnahme der Spur 10 des Stanzwerkzeuges 7 die Lamelle A und in der Lamellenaufnahme der Spur 11 die Lamelle B (Fig. 6). Die angesprochenen beiden Lamellen A, B sind in Fig. 6 jeweils durch eine Schraffur gekennzeichnet. In dem ersten Stanzhub werden somit die in Fig. 6 durch Schraffur gekennzeichneten Lamellen A und B aus dem Blechband 2 gestanzt. Die beiden Lamellen A, B liegen um 180° verdreht zueinander in der jeweiligen Lamellenaufnahme einer Dreheinheit 22 des Stanzwerkzeugs 7. Sie hat eine Drehachse 23 (Fig. 6 und 7), die im Bereich außerhalb der aus den Lamellen A, B zu bildenden Lamellenstapel 9 liegt. Die im ersten Stanzhub ausgestanzten Lamellen A, B aus den Spuren 10 und 11 bilden innerhalb des Lamellenstapels 9 die unterste Lamelle je eines Lamellenstapels.

Bevor der nächste Stanzhub in der Stanzpresse 1 ausgeführt wird, werden die Schneidstempel des Stanzwerkzeuges 7 so weit zurückgefahren, dass sie sich außerhalb der Matrizen des Stanzwerkzeugs 7 sowie außerhalb des Blechbandes 2 befinden. Dann wird das Blechband 2 um einen Vorschubschritt 24 (Fig. 2) in Vorschubrichtung 25 mittels des Vorschubapparates 6 weitertransportiert. Gleichzeitig wird die Dreheinheit 22 um die Achse 23 um 180° gedreht. Nunmehr erfolgt der nächste Stanzhub mit dem Stanzwerkzeug 7. Hierbei werden wiederum gleichzeitig zwei Lamellen A und B in den Spuren 10 und 11 gestanzt. Wenn die gestanzten Lamellen durch die Schneidstempel nach unten in die Dreheinheit 22 gedrückt werden, gelangt die soeben gestanzte Lamelle A auf die beim vorigen Stanzhub erzeugte Lamelle B und die soeben gestanzte Lamelle B auf die im vorigen Stanzhub erzeugte Lamelle A. Aufgrund der 180°-Drehung liegen die Lamellen A und B deckungsgleich aufeinander.

Für den nachfolgenden Stanzhub werden erneut die Schneidstempel zurückgefahren, das Blechband 2 um den Vorschubschritt 24 in Vorschubrichtung 25 weitertransportiert, wobei gleichzeitig die Dreheinheit 22 erneut um ihre Achse 23 um 180° gedreht wird. Die bei diesem Stanzschritt hergestellten Lamellen A und B gelangen dann wiederum auf die zuvor gestanzten Lamellen B und A.

Auf diese Weise werden gleichzeitig zwei Lamellenstapel 9 gebildet, bei denen die Lamellen A und B jeweils abwechselnd aufeinander liegen.

Auf diese Weise wird vor jedem Stanzschritt die Dreheinheit 22 um die Achse 23 um 180° gedreht, so dass die gestanzten Lamellen A, B abwechselnd nacheinander innerhalb des Lamellenstapels 9 abgelegt werden.

Da im beschriebenen Ausführungsbeispiel vor jedem Stanzhub die Dreheinheit 22 um 180° gedreht wird, erfolgt die Schichtung innerhalb des Lamellenstapels 9 in der Reihenfolge A B A ....

Es ist aber auch möglich, nicht vor jedem Stanzschritt die Dreheinheit 22 um ihre Achse 23 um 180° zu drehen. So ist es beispielsweise möglich, erst nach jedem zweiten Stanzschritt die Dreheinheit zu drehen. Dann ergibt sich die Stapelfolge A A B B A A B B .... Die Zahl der Stanzhübe zwischen aufeinanderfolgenden Drehungen der Dreheinheit 22 bestimmt somit die Stapelfolge innerhalb des Lamellenstapels 9.

Falls es erforderlich sein sollte, kann die Stapelfolge innerhalb des Lamellenstapels 9 auch variieren, beispielsweise in der Form A B A A B A B B B A A ....

Innerhalb der Stanzpresse 1 wird der Lamellenstapel 9 zusammengestellt und in bekannter Weise der Dreheinheit 22 entnommen. Der Lamellenstapel 9 bildet das Endprodukt, das unmittelbar in das jeweilige Aggregat eingebaut wird.

Die Dreheinheit 22 ist in einem Werkzeugunterteil 26 untergebracht (Fig. 7) und hat einen Drehkörper 27, der mit Lagern 28, 29 drehbar im Werkzeugunterteil 26 gelagert ist. Beispielsweise wird der Drehkörper 27 durch zwei axial mit Abstand übereinander angeordnete Lager 28, 29 abgestützt. Die Lager 28, 29 sind vorteilhaft Wälzlager, beispielsweise Rollenlager. Die beiden Lager 28, 29 sind durch einen radial nach innen vorstehenden Ring 30 axial voneinander getrennt. Der Ring 30 ist vorteilhaft einstückig mit dem Werkzeugunterteil 26 ausgebildet.

Außenringe 31, 32 der Lager 28, 29 liegen an einer Innenwand 33 eines Aufnahmeraumes 34 des Werkzeugunterteiles 26 an und stützen sich an den radialen Ringflächen 35, 36 des Ringes 30 axial ab. Das obere Lager 28 ist durch eine Matrizenhalterung 37 axial gesichert, die in die Oberseite des Werkzeugunterteiles 26 eingesetzt und mit ihm fest verbunden ist. Mit der Matrizenhalterung 37 wird eine Matrize 38 axial gesichert, die mit ihrer Unterseite auf der Stirnseite des Drehkörpers 27 aufliegt. Die Matrize 38 hat am unteren Ende einen radial vorstehenden umlaufenden Flansch 39, der von der Matrizenhalterung 37 axial übergriffen wird.

Die Matrize 38 ist so ausgebildet, dass in der beschriebenen Weise gleichzeitig die Lamellen A und B in einem Stanzhub aus dem Blechband 2 gestanzt werden. In Fig. 7 ist die Matrizenkontur 40 für die in der Spur 10 gestanzten Lamellen A sowie die Matrizenkontur 41 für die in der Spur 11 gestanzten Lamellen B erkennbar.

Der Drehkörper 27 weist den Matrizenkonturen 40, 41 der Matrize 38 entsprechende Aufnahmekonturen 42 und 43 für die Lamellen A und B auf. Die Anzahl der Aufnahmen 42, 43 ist größer gleich der Anzahl der gestanzten Lamellen A, B je Stanzhub. Dreht der Drehkörper 27 beispielsweise um 90°, dann sind vier Aufnahmen 42, 43 erforderlich, obwohl je Stanzhub nur zwei Lamellen A, B erzeugt werden.

In den Drehkörper 27 ist ein Bremskörper 44 eingesetzt, der die Aufnahmekonturen 42, 43 aufweist. Der Bremskörper 44 ist so ausgebildet, dass die gestanzten Lamellen A, B nicht durch die Aufnahmekonturen 42, 43 fallen, sondern mittels Reibschluss in den Aufnahmekonturen 42, 43 hängenbleiben. Der Reibwiderstand ist so groß, dass in den Aufnahmekonturen 42, 43 des Bremskörpers 44 die gestanzten Lamellen A, B zum Lamellenstapel 9 gestapelt und mittels bekannter Verbindungsverfahren verbunden werden können. Bei jedem Stanzhub wird der im Bremskörper 44 gebildete Teil der Lamellenstapel 9 jeweils um eine Lamellendicke nach unten bewegt.

Die fertigen Lamellenstapel 9 werden durch eine Austrittsöffnung 45 an der Unterseite des Werkzeugunterteiles 26 entnommen und beispielsweise mit einer (nicht dargestellten) Transportvorrichtung abtransportiert.

An der Außenseite des Drehkörpers 27 ist am unteren Ende ein Zahnrad 46 befestigt, mit dem die Dreheinheit 22 um ihre Achse 23 gedreht werden kann. Mit dem Zahnrad 46 kann ein Zahnrad des zugehörigen Antriebes oder beispielsweise auch ein Zahnriemen in Eingriff sein.

Bei der beschriebenen Verfahrensweise werden die aufeinanderliegenden Lamellen A, B verdreht geschichtet. Die aus dem Blechband 2 in einem Stanzhub gestanzten Lamellen A, B liegen innerhalb des Blechbandes 2 um 180° verdreht zueinander (s. Fig. 6). Da vor dem Stanzvorgang die Dreheinheit 22 jedoch um 180° gedreht wird, gelangt die Lamelle A auf die Lamelle B und die Lamelle B auf die Lamelle A, wodurch die verdrehte Schichtung der aufeinanderliegenden Lamellen innerhalb des Lamellenstapels 9 erreicht wird.

Die in Fig. 6 durch Schraffur gekennzeichneten Lamellen A, B in den beiden Spuren 10, 11 kennzeichnen auch die Lage der Lamellenstapel 9, die in der Dreheinheit 22 gebildet werden.

Erkennbar ist, dass die Drehachse 23 der Dreheinheit 22 im Bereich außerhalb der Lamellenstapel 9 liegt. Beim beschriebenen Ausführungsbeispiel haben die Endprodukte 9 aufgrund der beschriebenen Form der Lamellen A, B eine gekrümmte Außenseite 15 sowie eine gekrümmte Innenseite 16. Die Drehachse 23 der Dreheinheit 22 liegt hierbei außerhalb des Mittelpunktes des Außendurchmessers 15 des Endproduktes 9 sowie auch außerhalb des Mittelpunktes des Innendurchmessers 16 des Endproduktes 9.

Mit dem beschriebenen Verfahren ist es möglich, nicht rotationssymmetrische Teile gegeneinander verdreht innerhalb des Lamellenstapels 9 aufeinander zu legen. Je nach Anzahl der Spuren können hierbei gleichzeitig 2, 3 oder mehr Lamellenstapel 9 gebildet werden. Das Stanzwerkzeug 7 ist an die Zahl der Spuren angepasst, wobei auch der Drehwinkel der Dreheinheit 22 an die Zahl der Spuren angepasst werden kann. Innerhalb eines Stanzwerkzeugs 7 können sich, abhängig von der Anzahl der Spuren, eine oder mehrere Dreheinheiten befinden. Wie anhand des Ausführungsbei,spiels beispielhaft beschrieben worden ist, kann die Stapelfolge dadurch variiert werden, dass die Dreheinheit 22 nicht nach jedem Stanzhub um den entsprechenden Winkel gedreht wird. Es ist dadurch sehr einfach möglich, den Lamellenstapel 9 im Hinblick auf die erforderlichen elektrischen und/oder die geometrischen Eigenschaften optimal zu erzeugen.

## Patentansprüche

1. Verfahren zur Herstellung von aus Lamellenstapeln (9) gebildeten Endprodukten, bei dem aus einem Blechband (2) nicht rotationssymmetrische Lamellen (A, B) gestanzt werden, die zur Bildung des Lamellenstapels (9) in einer Dreheinheit (22) aufeinandergesetzt und miteinander verbunden werden, wobei die bei einem Stanzhub gestanzten Lamellen (A, B) innerhalb des Blechbandes (2) verdreht zueinander liegen,
**dadurch gekennzeichnet, dass** jede oder wenigstens einige der Lamellen (A, B) nach dem Stanzhub mittels der Dreheinheit (22) um eine außerhalb des ein Endprodukt bildenden Lamellenstapels (9) liegende Achse (23) so gedreht werden, dass die nach dem Stanzen verdreht zueinander liegenden Lamellen (A, B) zur Herstellung des Endproduktes (9) in der Dreheinheit (22) deckungsgleich aufeinander liegen.

2. Verfahren nach Anspruch 1,
**dadurch gekennzeichnet, dass** die Lamellen (A, B) in wenigstens zwei Spuren (10, 11) aus dem Blechband (2) gestanzt werden.

3. Verfahren nach Anspruch 1 oder 2,
**dadurch gekennzeichnet, dass** in einem Stanzhub gleichzeitig wenigstens zwei Lamellen (A, B) aus dem Blechband (2) gestanzt werden.

4. Verfahren nach einem der Ansprüche 1 bis 3,
**dadurch gekennzeichnet, dass** die Drehachse (23) im Bereich zwischen gleichzeitig gestanzten Lamellen (A, B) liegt.

5. Verfahren nach einem der Ansprüche 1 bis 4,
**dadurch gekennzeichnet, dass** aus den gestanzten Lamellen (A, B)
gleichzeitig wenigstens zwei Lamellenstapel (9) gebildet werden.

6. Verfahren nach einem der Ansprüche 1 bis 5,
**dadurch gekennzeichnet, dass** die Lamellen (A, B) eine teilkreisförmig verlaufende Außenseite (15) aufweisen, und dass die Drehachse (23) der Dreheinheit (22) außerhalb des Mittelpunktes des Außendurchmessers des Lamellenstapels (9) liegt.

7. Verfahren nach einem der Ansprüche 1 bis 6,
**dadurch gekennzeichnet**, die Lamellen (A, B) eine teilkreisförmig verlaufende Innenseite (16) aufweisen, und dass die Drehachse (23) der Dreheinheit (22) außerhalb des Mittelpunktes des Innendurchmessers des Lamellenstapels (9) liegt.

8. Verfahren nach einem der Ansprüche 1 bis 7
**dadurch gekennzeichnet, dass** sich innerhalb des Stanzwerkzeugs (7) mindestens eine Dreheinheit (22) befindet.

## Claims

1. A method for producing end products made from lamination stacks (9), in which non-rotationally-symmetrical laminations (A, B) are punched out of a sheet metal strip (2), said laminations being placed one on top of the other and connected to each other in a rotating unit (22) to form the lamination stack (9), the laminations (A, B) that are punched in one punching stroke lying rotated in relation to each other within the sheet metal strip (2),
**characterised in that** after the punching stroke, all or at least some of the laminations (A, B) are rotated about an axis (23), which lies outside the lamination stack (9) that forms an end product, by means of the rotating unit (22) in such a manner that the laminations (A, B), which lie rotated in relation to each other after punching, lie aligned with each other in the rotating unit (22) to produce the end product (9).

2. The method according to claim 1,
**characterised in that** the laminations (A, B) are punched out of the sheet metal strip (2) in at least two tracks (10, 11).

3. The method according to claim 1 or 2,
**characterised in that** at least two laminations (A, B) are simultaneously punched out of the sheet metal strip (2) in one punching stroke.

4. The method according to any one of claims 1 to 3, **characterised in that** the rotation axis (23) lies in the region between simultaneously punched laminations (A, B).

5. The method according to any one of claims 1 to 4,
**characterised in that** at least two lamination stacks (9) are formed simultaneously from the punched laminations (A, B).

6. The method according to any one of claims 1 to 5,
**characterised in that** the laminations (A, B) have an outer side (15) that runs in a part-circle-shaped manner, and **in that** the rotation axis (23) of the rotating unit (22) lies outside the centre point of the outer diameter of the lamination stack (9).

7. The method according to any one of claims 1 to 6,
**characterised in that** the laminations (A, B) have an inner side (16) that runs in a part-circle-shaped manner, and the rotation axis (23) of the rotating unit (22) lies outside the centre point of the inner diameter of the lamination stack (9).

8. The method according to any one of claims 1 to 7,
**characterised in that** at least one rotating unit (22) is situated inside the punching tool (7).

## Revendications

1. Procédé de fabrication de produits finis constitués de piles de lamelles (9), dans lequel à partir d'une bande de tôle (2) des lamelles (A, B) non symétriques en rotation sont découpées à l'emporte-pièce, qui sont reliées les unes aux autres et les unes sur les autres afin de former la pile de lamelles (9) dans une unité de rotation (22), dans lequel les lamelles (A, B) découpées à l'emporte-pièce lors d'une course de découpe reposer en torsion les unes par rapport aux autres à l'intérieur de la bande de tôle (2),
**caractérisé en ce que** chaque ou au moins quelques-unes des lamelles (A, B) après la course de découpe est tournée au moyen de l'unité rotative (22) autour d'un axe (23) situé à l'extérieur de la pile de lamelles (9) formant un produit fini de telle sorte que les lamelles (A, B) reposant en torsion les unes par rapport aux autres après la découpe viennent reposer de manière coextensive dans l'unité de rotation (22) afin de fabriquer le produit fini (9).

2. Procédé selon la revendication 1,
**caractérisé en ce que** les lamelles (A, B) sont découpées à l'emporte-pièce en au moins deux pistes (10, 11) à partir de la bande de tôle (2).

3. Procédé selon la revendication 1 ou 2,
**caractérisé en ce que** lors d'une course de découpe simultanément au moins deux lamelles (A, B) sont découpées à l'emporte-pièce à partir de la bande de tôle (2).

4. Procédé selon une des revendications 1 à 3,
**caractérisé en ce que** l'axe de rotation (23) est situé dans la zone entre des lamelles (A, B) découpées simultanément à l'emporte-pièce.

5. Procédé selon une des revendications 1 à 4,
**caractérisé en ce qu'**à partir des lamelles découpées à l'emporte-pièce (A, B) au moins deux piles de lamelles (9) sont formées simultanément.

6. Procédé selon une des revendications 1 à 5,
**caractérisé en ce que** les lamelles (A, B) présentent un côté extérieur (15) s'étendant en forme de circulaire partielle, et **en ce que** l'axe de rotation (23) de l'unité de rotation (22) est situé à l'extérieur du point central du diamètre extérieur de la pile de lamelles (9).

7. Procédé selon une des revendications 1 à 6,
**caractérisé en ce que** les lamelles (A, B) présentent un côté intérieur (16) s'étendant en forme de circulaire partielle, et **en ce que** l'axe de rotation (23) de l'unité de rotation (22) est situé à l'extérieur du point central du diamètre intérieur de la pile de lamelles (9).

8. Procédé selon une des revendications 1 à 7,
**caractérisé en ce qu'**au moins une unité de rotation (22) se trouve à l'intérieur de l'outil de découpe à l'emporte-pièce (7).
